# EUROPÄISCHE PATENTSCHRIFT

(11) **EP 3 553 726 B1**
(45) Veröffentlichungstag und Bekanntmachung des Hinweises auf die Patenterteilung: **19.02.2025**
(21) Anmeldenummer: 19165925.9
(22) Anmeldetag: 28.03.2019
(51) Int. Cl.: G06Q 20/38, G06Q 20/20, G06F 21/64, G06F 21/78, H04L 9/14, H04L 9/32

(54) **VERFAHREN ZUM MANIPULATIONSSICHEREN SPEICHERN VON TRANSAKTIONSDATEN IN EINEM SYSTEM MIT ELEKTRONISCHEN REGISTRIERKASSEN UND SYSTEM**
METHOD FOR TAMPER-PROOF STORING OF TRANSACTION DATA IN A SYSTEM WITH ELECTRONIC CASH REGISTERS AND SYSTEM
PROCÉDÉ DE MÉMORISATION À FIABILITÉ DE MANIPULATION DES DONNÉES DE TRANSACTION DANS UN SYSTÈME DE CAISSES ENREGISTREUSES ÉLECTRONIQUES ET SYSTÈME

(30) Priorität: 12.04.2018 DE 102018108680
(43) Veröffentlichungstag der Anmeldung: 16.10.2019
(73) Patentinhaber: Bundesdruckerei GmbH, 10969 Berlin (DE)
(72) Erfinder: Byszio-Wegener, Frank, 10969 Berlin (DE)
(74) Vertreter: Bittner, Thomas L.

(56) Entgegenhaltungen:
- EP-A2- 1 398 741
- WO-A1-02/11091
- DE-T2- 69 913 365
- US-A1- 2008 040 284
- US-A1- 2009 150 290
- US-A1- 2014 229 305
- US-A1- 2016 098 723
- US-B1- 6 394 341
- "Advances in Cryptology-CRYPT0' 90", vol. 537, 31 January 1991, SPRINGER BERLIN HEIDELBERG, Berlin, Heidelberg, ISBN: 978-3-540-54508-8, article HABER STUART ET AL: "How to Time-Stamp a Digital Document", pages: 437 - 455, XP055858564, DOI: 10.1007/3-540-38424-3_32
- ANONYMOUS: "Merkle tree - Wikipedia", 4 February 2018 (2018-02-04), INTERNET, pages 1 - 5, XP055926774, Retrieved from the Internet <URL:https://en.wikipedia.org/w/index.php?title=Merkle_tree&oldid=823933805> [retrieved on 20220531]
- ANONYMOUS: "Lamport signature - Wikipedia", 5 April 2018 (2018-04-05), Internet, pages 1 - 6, XP055926777, Retrieved from the Internet <URL:https://en.wikipedia.org/w/index.php?title=Lamport_signature&oldid=834392604> [retrieved on 20220531]
- ANONYMOUS: "Hash-based cryptography - Wikipedia", 29 August 2017 (2017-08-29), Internet, pages 1 - 5, XP055926781, Retrieved from the Internet <URL:https://en.wikipedia.org/w/index.php?title=Hash-based_cryptography&oldid=797819068> [retrieved on 20220531]
- ANONYMOUS: "Registrierkassensicherheitsverordnung, RKSV mit Anlage", BUNDESGESETZBLATT FÜR DIE REPUBLIK ÖSTERREICH, 11 December 2015 (2015-12-11), BUNDESGESETZBLATT FÜR DIE REPUBLIK ÖSTERREICH, pages 1 - 17, XP055934693, Retrieved from the Internet <URL:https://www.ris.bka.gv.at/eli/bgbl/II/2015/410> [retrieved on 20220623]
- ANONYMOUS: "ANSI ASC X9.95 Standard", WIKIPEDIA, THE FREE ENCYCLOPEDIA, 29 January 2018 (2018-01-29), INTERNET, pages 1 - 4, XP055934697, Retrieved from the Internet <URL:https://en.wikipedia.org/w/index.php?%20title=ANSLASC_X9.95_Standard&oldid=822939234> [retrieved on 20220623]
- DETLEF HÜHNLEIN AND ULRIKE KORTE: "Grundlagen der elektronishen Signatur (Recht Technik Anwendung)", 1 March 2006 (2006-03-01), pages i - ix, XP007916887, Retrieved from the Internet <URL:https://www.bsi.bund.de/SharedDocs/Downloads/DE/BSI/ElekSignatur/esig_pdf.pdf>

## Beschreibung

Die Erfindung betrifft ein Verfahren zum manipulationssicheren Speichern von Transaktionsdaten in einem System mit elektronischen Registrierkassen und ein System.

### Hintergrund

In Verbindung mit dem Betrieb von elektronischen Registrierkassen, wozu beispielsweise elektronische Kassen an beliebigen Verkaufsstellen sowie Taxameter in Taxis zählen, ist es notwendig, manipulationssicher elektronische Daten zu speichern, die mit der jeweiligen elektronischen Registrierkasse erfasste Transaktionen anzeigen. Der Transaktion jeweils zugeordnete Transaktionsdaten zeigen zum Beispiel einen mit der jeweiligen Transaktion verbundenen Geldbetrag an.

Es wurde vorgeschlagen, in Systemen mit elektronischen Registrierkassen die den erfassten Transaktionen zugeordneten Transaktionsdaten mithilfe der sogenannten WORM-Technologie zu speichern, was nach dem einmaligen Speichern ein mehrfaches Lesen der elektronischen Daten ermöglicht, aber keine Änderung der gespeicherten Daten.

Aus dem Dokument DE 699 13 365 T2 ist ein Verfahren zum Bereitstellen eines überprüfbaren elektronischen Journalsystems für eine Kassenvorrichtung bekannt, welches Folgendes umfasst: Empfangen von Transaktionsdaten, die sich auf Transaktionen beziehen; Speichern der Transaktionsdaten in einem Arbeitsspeicher; Erzeugen eines Journalaktualisierungsereignisses; Übertragen der im Arbeitsspeicher gespeicherten Transaktionsdaten als Reaktion auf ein Journalaktualisierungsereignis in einen ersten Teil eines vom Arbeitsspeicher getrennten Journalspeichers; und betragen der Datensignatur als Reaktion auf eine Journalaktualisierungsereignis in einen zweiten Teil des Journalspeichers. Auf die Weise soll ein prüfbares elektronisches Journalsystem für eine Kasseneinrichtung bereitgestellt werden, welches anstelle einer Journaldruckstation in einem Kassendrucker mit zwei Druckstationen eine elektronische Journaldatei verwaltet. Die Transaktionsdaten werden in einem nichtflüchtigen Arbeitsspeicher gespeichert. Auf Basis des Inhalts des Arbeitsspeichers wird für ein Journal eine Datensignatur ermittelt. Die Datensignatur ist eine verschlüsselte Version eines Nachrichtenauszugs, die die gesamten während einer Journalperiode der elektronischen Journaldatei übergebenen Transaktionsdaten widerspiegelt.

In Dokument US 2009/0150290 A1 sind ein Verfahren und eine Vorrichtung zum Erzeugen von Sicherheitscodes für Tickets offenbart. Es soll die Gültigkeit einer Lotterie-Quittung verifiziert werden.

In Dokument EP 1 398 741 A2 ist ein Belegdrucker offenbart, welcher über eine Schnittstelle auszudruckende Daten empfängt und daraufhin eine kryptographisch gesicherte Signatur dieser Daten zurücksendet. Die Signatur umfasst zum Beispiel eine Laufnummer oder einen Zeitstempel, die zusammen mit der Signatur gebildet werden.

Dokument US 2014/0229305 A1 betrifft ein papierloses Echtzeitsystem zum Handhaben von Transaktionsbelegen, die an Verkaufsstellen erzeugt werden.

In Dokument WO 02/11091 A1 ist das Bereitstellen einer digitalen Quittung für eine Transaktion offenbart.

### Zusammenfassung

Aufgabe der Erfindung ist es, ein Verfahren zum manipulationssicheren Speichern von Transaktionsdaten in einem System mit elektronischen Registrierkassen sowie ein System anzugeben, mit denen die in Verbindung mit Transaktionen, die in den elektronischen Registrierkassen erfasst werden, stehenden Daten effizient und sicherer gespeichert werden können, sodass sie später ausgewertet werden können.

Zur Lösung sind ein Verfahren zum manipulationssicheren Speichern von Transaktionsdaten in einem System von elektronischen Registrierkassen nach dem unabhängigen Anspruch 1 sowie ein System nach dem unabhängigen Anspruch 8 geschaffen.

Ausgestaltungen sind Gegenstand von abhängigen Ansprüchen.

Die Transaktionsdaten geben Informationen über die jeweilige Transaktion an, beispielsweise einen Rechnungspreis der Transaktion. Alternativ oder ergänzend können die Transaktionsdaten elektronische Informationen betreffend eine Ware oder eine Dienstleistung anzeigen, für die eine Transaktion mithilfe der elektronischen Registrierkasse erfasst wurde.

Mithilfe der vorgeschlagenen Technologie kann auf einfache und effiziente Art und Weise sichergestellt werden, dass für die in den elektronischen Registrierkassen erfassten Transaktionen elektronische Informationen manipulationssicher gespeichert werden, sodass die elektronischen Informationen über die Transaktion später für eine Auswertung bereitgestellt sind, beispielsweise durch Finanz- oder Steuerbehörden, zum Beispiel eine Prüfung, ob eine nicht erlaubte Datenmanipulation stattgefunden hat.

Bei dem Verfahren kann Folgendes vorgesehen sein: Bereitstellen der ersten elektronischen Registrierkasse mit einem ersten wechselbaren Speichermedium und Speichern der ersten transaktionsbezogenen Daten auf dem wechselbaren Speichermedium. Bei dieser Ausführungsform werden die ersten transaktionsbezogenen Daten auf dem wechselbaren Speichermedium gespeichert, welches nach dem Speichern von der elektronischen Registrierkasse getrennt und dann ausgelesen werden kann, wodurch eine Absicherung gegen eine Manipulation der transaktionsbezogenen Daten bereitgestellt ist. Alternativ oder ergänzend können die ersten transaktionsbezogenen Daten auch in einem Speicher der ersten elektronischen Registrierkasse selbst gespeichert werden, zumindest vorübergehend, beispielweise bis zu einer wahlweise vorgesehenen Übertragung an die zentrale Servereinrichtung, was zeitversetzt zum Erzeugen und digitalen Signieren ausgeführt werden kann. Hierauf können die transaktionsbezogenen Daten in der ersten elektronischen Registrierkasse gelöscht werden.

Bei dem Verfahren kann weiterhin Folgendes vorgesehen sein: Bereitstellen des wechselbaren Speichermediums mit einer ersten Chipkarte mit einem Chipkartenspeicher, Bereitstellen der ersten elektronischen Registrierkasse mit einem ersten Chipkarten-Leser und Speichern der ersten transaktionsbezogenen Daten in dem Chipkartenspeicher der ersten Chipkarte, die in das erste Chipkarten-Lesegerät eingeführt ist. Die Chipkarte kann nach dem Speichern der transaktionsbezogenen Daten aus dem Chipkartenleser entfernt werden und an anderer Stelle ausgelesen werden. Das wechselbare Speichermedium, insbesondere die Chipkarte, kann personalisiert sein, derart, dass das Speichermedium zum Beispiel einer Person oder einem Unternehmen zugeordnet ist, beispielweise dadurch, dass im Chipkartenspeicher Identifizierungsdaten hinterlegt sind. Auf diese Weise werden die transaktionsbezogenen Daten der Person oder dem Unternehmen zugeordnet, sodass eine personenbezogene oder unternehmensbezogene Prüfung einer möglichen Manipulation der gespeicherten Transaktionsdaten ermöglicht ist.

Die elektronischen Registrierkassen können zum Austausch von elektronischen Daten jeweils wenigstens zeitweise mit einer zentralen Servereinrichtung verbindbar sind. Dann kann Folgendes vorgesehen sein: Übertragen von ersten transaktionsbezogenen Daten, welche den ersten Hash-Wert mit den ersten Zusatzinformationsdaten und die ersten Signaturdaten umfassen, an die zentralen Servereinrichtung; und Speichern der ersten transaktionsbezogenen Daten in einer Speichereinrichtung der zentralen Servereinrichtung.

Das Berechnen des ersten Hash-Wertes kann wenigstens eine Bestimmung aus der folgenden Gruppe umfassen: Bestimmen des Hash-Wertes als Prüfsumme und Bestimmen des Hash-Wertes mittels kryptologischer Hashfunktion. Die Prüfsumme kann beispielsweise mittels CRC ("Cyclic Redundancy Check") berechnet werden. Hash-Werte, die als Prüfsumme bestimmt werden, sind nicht mittels einer kryptologischen Hash-Funktion berechnet.

Die zweiten transaktionsbezogenen Daten werden in der Speichereinrichtung gespeichert, wobei hierbei der erste und der zweite Hash-Wert in einem Hash-Baum oder Hash-Kette in der Speichereinrichtung gespeichert werden. Es kann sich um einen serverseitigen Hash-Baum handeln, wenn die Speicherung in der der zentralen Servereinrichtung zugeordneten Speichereinrichtung erfolgt. Vergleichbar den ersten transaktionsbezogenen Daten können die zweiten transaktionsbezogenen Daten ergänzend oder alternativ auf dem wechselbaren Speichermedium gespeichert werden.

Für die Ausbildung des Hash-Baums (Baum mit Hash-Werten) oder einer Hash-Kette (Kette von Hash-Werten) sind verschiedene Technologien als solche bekannt. In einer Ausgestaltung kann hierbei die Blockchain-Technologie zum Speichern der ersten und der zweiten Hash-Werte genutzt werden. Ein Hash-Baum ist eine Datenstruktur in der Kryptographie und Informatik. Ein Hash-Baum ist ein Baum aus Hashwerten von Datenblöcken, beispielsweise von einer Datei. Hash-Bäume sind eine Erweiterung von Hash-Listen und dienen gleichermaßen dazu, die Integrität von Daten sicherzustellen.

Es kann vorgesehen sein, die zweiten transaktionsbezogenen Daten, welche den zweiten Hash-Wert mit den zweiten Zusatzinformationsdaten und die zweiten Signaturdaten umfassen, an die zentralen Servereinrichtung zu übertragen und in der der zentralen Servereinrichtung zugeordneten Speichereinrichtung zu speichern.

Vergleichbar dem Erfassen von Transaktionen in der ersten elektronischen Registrierkasse kann dieses in Verbindung mit einer zweiten der elektronischen Registrierkassen ausgeführt werden. Beim Speichern in der Servereinrichtung können die Hash-Werte von der ersten und der zweiten elektronischen Registrierkasse in einem gemeinsamen serverseitigen Hash-Baum gespeichert werden. Alternativ kann vorgesehen sein, registrierkassenbezogen getrennte Hash-Bäume für die Hash-Werte von der ersten und der zweiten elektronischen Registrierkasse in der Servereinrichtung zu speichern, beispielweise der der zentralen Servereinrichtung zugeordneten Speichereinrichtung .

Der erste und der zweite Hash-Wert können in einem kassenseitigen Hash-Baum in einer Speichereinrichtung der ersten elektronischen Registrierkasse gespeichert werden. Der kassenseitige Hash-Baum kann in der elektronischen Registrierkasse selbst berechnet und gespeichert werden. Es kann vorgesehen sein, den kassenseitigen Hash-Baum alternativ oder zusätzlich auf dem wechselbaren Speichermedium zu speichern. In einer Ausführungsform werden elektronische Baumdaten, die den kassenseitig bestimmten Hash-Baum anzeigen, an die zentrale Servereinrichtung übermittelt. Der kassenseitig erzeugte Hash-Baum kann dann als serverseitiger Hash-Baum in der zentralen Servereinrichtung gespeichert werden. Alternativ kann der serverseitige Hash-Baum bei dieser oder anderen Ausführungsformen serverseitig berechnet werden.

Die ersten Zusatzinformationen können erste Ortsdaten umfassen, die einen ersten Aufstellort für die erste elektronische Registrierkasse anzeigen. Die ersten Ortsdaten können beispielsweise eine Position in einem weltweiten Positionierungssystem (beispielsweise "Global Positioning System") angeben. Ein Aufstellort der elektronischen Registrierkasse kann auch auf andere Art und Weise angezeigt werden, beispielsweise eine Adresse oder unter Bezugnahme auf den Namen einer Verkaufsstelle, für die die Adressinformation bekannt ist. Im Fall eines Taxameters eines Taxis können die Ortsdaten eine Taxinummer anzeigen.

Bei dem Verfahren kann Folgendes vorgesehen sein: Bereitstellen einer ersten Menge von elektronischen Schlüsseln, die aus einer ersten Anzahl von elektronischen Schlüsseln besteht, in der ersten elektronischen Registrierkasse, und digitales Signieren des ersten Hash-Wertes mit dem zugeordneten Zeitstempel unter Verwendung eines ersten elektronischen Schlüssels aus der ersten Menge von elektronischen Schlüsseln. Hierbei kann vorgesehen sein, dass der erste elektronische Schlüssel nur und ausschließlich für das digitale Signieren in Verbindung mit genau einer Transaktion bereitgestellt wird, während weitere mögliche Versuche, diesen elektronischen Schlüssel zum digitalen Signieren zu verwenden, in der ersten elektronischen Registrierkasse blockiert werden, zum mittels Prozessabbruch. Auf diese Weise wird jeder elektronische Schlüssel aus der Menge von elektronischen Schlüsseln nur genau einmal genutzt. Es besteht eine 1-1-Beziehung zwischen den elektronischen Schlüsseln der ersten Menge und den in der ersten elektronischen Registrierkasse erfassten Transaktionen. Die Menge von elektronischen Schlüsseln kann beispielsweise mittels einer Chipkarte bereitgestellt werden, die mittels eines Chipkarten-Lesegeräts auslesbar sind, welches an die elektronische Registrierkasse angeschlossen ist. Alternativ oder ergänzend kann die Menge von elektronischen Schlüsseln über eine Schnittstelle für eine kabellose Datenübertragung an die elektronische Registrierkasse übermittelt werden.

Beim Prüfen der ersten und / oder der zweiten transaktionsbezogenen Daten auf eine mögliche Datenmanipulation kann eine Anzahl von genutzten elektronischen Schlüsseln aus der ersten Menge von elektronischen Schlüsseln, die in der ersten elektronischen Registrierkasse zum elektronischen Signieren verwendet wurden, mit einer Anzahl von hierbei elektronisch signierten Transaktionen verglichen werden, für die jeweils zugeordnete transaktionsbezogene Daten in der Speichereinrichtung gespeichert wurden, zum Beispiel der der zentralen Servereinrichtung zugeordneten Speichereinrichtung, und es kann eine Datenmanipulation festgestellt werden, wenn die Anzahl von genutzten elektronischen Schlüsseln und die Anzahl von elektronisch signierten Transaktionen nicht übereinstimmen. Die Anzahl der verbrauchten oder genutzten elektronischen Schlüssel steht in direkter Beziehung zu der Anzahl von erfassten Transaktionen, sodass der Vergleich zwischen der Anzahl von genutzten elektronischen Schlüsseln einerseits und erfassten Transaktionen andererseits als zusätzliches Prüfkriterium herangezogen werden kann. Falls zum Beispiel transaktionsbezogene Daten für eine letzte Transaktion, für die die transaktionsbezogenen Daten zuvor erzeugt wurden, gelöscht wurden, würde dies beim Vergleich zu der Feststellung führen, dass mehr elektronische Schlüssel als erfasste Transaktionen gezählt werden, was als Hinweis auf eine Datenmanipulation gewertet wird.

In Verbindung mit dem System können die vorangehend für das Verfahren erläuterten Ausgestaltungen entsprechend vorgesehen sein.

### Beschreibung von Ausführungsbeispielen

Im Folgenden werden weitere Ausführungsbeispiele unter Bezugnahme auf eine Figur näher erläutert.

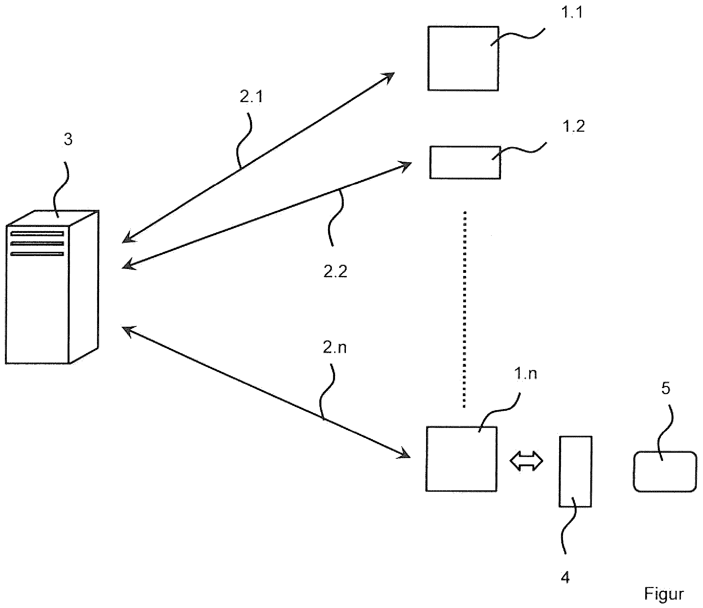

Die einzige Figur zeigt eine schematische Darstellung eines Systems mit elektronischen Registrierkassen 1.1, ..., 1.n (n > 1), die über eine jeweilige Datenkommunikationsleitung 2.1, ..., 2.n mit einer zentralen Servereinrichtung 3 zeitweise oder dauerhaft verbunden sind, um elektronische Daten auszutauschen. Die Datenkommunikationsleitungen 2.1, ..., 2.n können mit kabellosen oder kabelgebundenen Leitungen ausgebildet sein.

Einzelne oder alle der elektronischen Registrierkassen 1.1, ..., 1.n können mit einem zugeordneten Chipkarten-Lesegerät 4 ausgestattet sein. Mit dem Chipkartenlesegerät 4 können auf einer Chipkarte 5 elektronische Daten geschrieben werden. Mithilfe des Chipkarten-Lesegeräts 4 können gegebenenfalls auch elektronische Daten aus der Chipkarte 5 ausgelesen werden.

Im Folgenden wird ein Verfahren zum manipulationssicheren Speichern von Transaktionsdaten beispielhaft anhand des Systems in der Figur erläutert. Das manipulationssichere Speichern der Transaktionsdaten dient dazu, elektronische Informationen über Transaktionen, die mithilfe der elektronischen Registrierkassen 1.1, ..., 1.n erfasst werden, manipulationssicher zu speichern, sodass diese später ausgewertet werden können, beispielsweise durch Finanz- oder Steuerbehörden. Bei den elektronischen Registrierkassen 1.1, ..., 1.n kann es sich beispielsweise um elektronische Kassen in beliebigen Verkaufsstellen und / oder Taxameter in Taxis handeln.

Wird in einer ersten elektronischen Registrierkasse 1.1 eine erste Transaktion erfasst, so werden in der ersten elektronischen Registrierkasse 1.1 erste Transaktionsdaten erzeugt, die beispielsweise einen Geldbetrag anzeigen, der mit der Transaktion verbunden ist, zum Beispiel mit dem Verkauf einer Ware oder dem Erbringen einer Dienstleistung. Für die ersten Transaktionsdaten wird ein erster Hash-Wert in der ersten elektronischen Registrierkasse 1.1 erzeugt. Der erste Hash-Wert kann zum Beispiel als Prüfsumme für die ersten Transaktionsdaten erzeugt werden. Alternativ kann vorgesehen sein, für die ersten Transaktionsdaten einen Hash-Wert mittels einer kryptologischen Hash-Funktion zu erzeugen.

Dem ersten Hash-Wert wird in der ersten elektronischen Registrierkasse 1.1 Zusatzinformation zugeordnet. Erste Zugangsinformationsdaten können beispielsweise einen ersten Zeitstempel und / oder einen ersten Aufstellort für die erste elektronische Registrierkasse 1.1 anzeigen. Bei dem ersten Zeitstempel kann es sich um einen qualifizierten Zeitstempel handeln. Zum Beispiel regelt das deutsche Signaturgesetz die Anforderungen für die Ausstellung von qualifizierten Zeitstempeln als besonders hochwertige Form einer solchen Bescheinigung, bei der sichergestellt ist, dass die gültige gesetzliche Zeit aufgenommen wurde, und bei denen Fälschungen und Verfälschungen ausgeschlossen sind. Bei verwendeten Verfahren unterschreibt der Aussteller eines qualifizierten Zeitstempels als unbeteiligter Dritter den Hash-Wert des bescheinigten Dokumentes zusammen mit der aktuellen Zeitangabe (Datum und Uhrzeit) mit einer qualifizierten elektronischen Signatur. Das Time-Stamp Protocol (RFC 3161) regelt die Übertragung der Informationen eines Zeitstempeldienstes im Internet.

Der erste Hash-Wert mit den zugeordneten ersten Zusatzinformationsdaten wird in der ersten elektronischen Registrierkasse 1.1 elektronisch signiert, beispielsweise unter Verwendung eines ersten elektronischen Schlüssels, der in der ersten elektronischen Registrierkasse 1.1 bereitgestellt wird. Bei Verwendung des elektronischen Schlüssels erfolgt ein digitales Signieren.

Über die Datenkommunikationsleitung 2.1 können dann erste transaktionsbezogene Daten an die zentrale Servereinrichtung 3 übertragen und dort gespeichert werden, wobei die ersten transaktionsbezogenen Daten den ersten Hash-Wert mit dem zugeordneten ersten Zeitstempel sowie die beim digitalen Signieren erzeugte erste digitale Signatur umfassen.

Beim Eingehen und Speichern weiterer transaktionsbezogener Daten für weitere Transaktionen werden die jeweiligen Hash-Werte in der zentralen Speichereinrichtung 3 in einer serverseitigen Hash-Baumstruktur gespeichert, wie dies für Hash-Bäume als solches in verschiedene Ausführungsformen bekannt ist. Beispielsweise kann hierbei die Blockchain-Technologie zum Einsatz kommen.

Alternativ oder ergänzend kann eine Speicherung auf einem wechselbaren Speichermedium vorgesehen sehen, welches zum datenaustausch mit der Registrierkasse verbindbar ist.

Anhand der auf dem jeweils ausgewählten Speichermedium gespeicherten transaktionsbezogenen Daten kann später geprüft werden, ob die elektronischen Informationen betreffend die Transaktionen, welche in den elektronischen Registrierkassen 1.1, ..., 1.n erfasst wurden, manipulationsfrei sind. Hierzu trägt verbessernd die Speicherung der Hash-Werte in dem Hash-Baum bei.

Ergänzend kann Folgendes vorgesehen sein: In der ersten elektronischen Registrierkasse 1.1 wird eine Anzahl von elektronischen Schlüsseln für das digitale Signieren bereitgestellt. Jeder der elektronischen Schlüssel kann nur für das digitale Signieren in Verbindung mit genau einer Transaktion verwendet werden. Die Anzahl der verbrauchten elektronischen Schlüssel zeigt dann an, wie viele Transaktionen in der ersten elektronischen Registrierkasse 1.1 erfasst und gespeichert wurden. Beim Prüfen der transaktionsbezogenen Daten kann dann die Anzahl der verbrauchten elektronischen Schlüssel mit der Anzahl der erfassten Transaktionen verglichen werden. Wird keine Übereinstimmung festgestellt, so zeigt dies eine Manipulation der transaktionsbezogenen Daten an.

Die in der vorstehenden Beschreibung, den Ansprüchen sowie der Figur offenbarten Merkmale können sowohl einzeln als auch in beliebiger Kombination für die Verwirklichung der verschiedenen Ausführungen von Bedeutung sein.

### Bezugszeichenliste:

- 1.1, ..., 1.n: elektronische Registrierkassen
- 2.1, ..., 2.n: Datenkommunikationsleitungen
- 3: Servereinrichtung
- 4: Chipkarten-Lesegerät
- 5: Chipkarte

## Patentansprüche

1. Verfahren zum manipulationssicheren Speichern von Transaktionsdaten in einem System mit elektronischen Registrierkassen (1.1, ..., 1.n), aufweisend:
- Bereitstellen eines System mit elektronischen Registrierkassen (1.1, ..., 1.n);
- in einer ersten der elektronischen Registrierkassen (1.1, ..., 1.n),
- Bereitstellen einer ersten Menge von elektronischen Schlüsseln, die aus einer ersten Anzahl von elektronischen Schlüsseln besteht;
- Erzeugen von ersten Transaktionsdaten, die eine mittels der ersten elektronischen Registrierkasse erfasste erste Transaktion anzeigen und der ersten elektronischen Registrierkasse zugeordnet sind;
- Berechnen eines ersten Hash-Wertes für die ersten Transaktionsdaten;
- Zuordnen von ersten Zusatzinformationsdaten zu dem ersten Hash-Wert, wobei die ersten Zusatzinformationsdaten einen ersten Zeitstempel umfassen und der erste Zeitstempel wenigstens eine der folgenden Zeitinformationen anzeigt: Zeitinformation betreffend das Erfassen der ersten Transaktion, Zeitinformation betreffend das Erzeugen der ersten Transaktionsdaten, Zeitinformation betreffend Berechnen des ersten Hash-Wertes und Zeitinformation betreffend das Zuordnen der ersten Zusatzinformationsdaten;
- digitales Signieren des ersten Hash-Wertes mit den ersten Zusatzinformationsdaten unter Verwendung eines ersten elektronischen Schlüssels aus der ersten Menge von elektronischen Schlüsseln, wobei hierbei erste Signaturdaten erzeugt werden;
- Erzeugen von zweiten Transaktionsdaten, die eine mittels der ersten elektronischen Registrierkasse erfasste zweite Transaktion anzeigen und der ersten elektronischen Registrierkasse zugeordnet sind;
- Berechnen eines zweiten Hash-Wertes für die zweiten Transaktionsdaten;
- Zuordnen von zweiten Zusatzinformationsdaten zu dem zweiten Hash-Wert, wobei die zweiten Zusatzinformationsdaten einen zweiten Zeitstempel umfassen und der zweite Zeitstempel wenigstens einer der folgenden Zeitpunkt anzeigt: Zeitinformation betreffend das Erfassen der zweiten Transaktion, Zeitinformation betreffend das Erzeugen der zweiten Transaktionsdaten, Zeitinformation betreffend Berechnen des zweiten Hash-Wertes und Zeitinformation betreffend das Zuordnen der zweiten Zusatzinformationsdaten;
- digitales Signieren des zweiten Hash-Wertes mit den zweiten Zusatzinformationsdaten unter Verwendung eines weiteren elektronischen Schlüssels aus der ersten Menge von elektronischen Schlüsseln, welcher in der ersten elektronischen Registrierkasse noch nicht zum digitalen Signieren verwendet wurde, wobei hierbei zweite Signaturdaten erzeugt werden;
- Speichern von ersten transaktionsbezogenen Daten, die den ersten Hash-Wert mit den ersten Zusatzinformationsdaten und die ersten Signaturdaten umfassen, in einer Speichereinrichtung; und
- Speichern der zweiten transaktionsbezogenen Daten, die den zweiten Hash-Wert mit den zweiten Zusatzinformationsdaten und die zweiten Signaturdaten umfassen, in der Speichereinrichtung, wobei hierbei der erste und der zweite Hash-Wert in einem Hash-Baum in der Speichereinrichtung gespeichert werden;
wobei bei einem Prüfen der ersten und der zweiten transaktionsbezogenen Daten auf eine mögliche Datenmanipulation
- eine Anzahl von genutzten elektronischen Schlüsseln aus der ersten Menge von elektronischen Schlüsseln, die in der ersten elektronisch Registrierkasse zum digitalen Signieren verwendet wurden, mit einer Anzahl von erfassten Transaktionen verglichen wird, für die jeweils zugeordnete transaktionsbezogene Daten in der Speichereinrichtung gespeichert wurden, und
- eine Datenmanipulation festgestellt wird, wenn die Anzahl von genutzten elektronischen Schlüsseln und die Anzahl erfassten Transaktionen nicht übereinstimmen.

2. Verfahren nach Anspruch 1, **gekennzeichnet durch**
- Bereitstellen der ersten elektronischen Registrierkasse mit einem ersten wechselbaren Speichermedium und
- Speichern der ersten / zweiten transaktionsbezogenen Daten auf dem wechselbaren Speichermedium.

3. Verfahren nach Anspruch 2, **gekennzeichnet durch**
- Bereitstellen des wechselbaren Speichermediums mit einer ersten Chipkarte mit einem Chipkartenspeicher;
- Bereitstellen der ersten elektronischen Registrierkasse mit einem ersten Chipkarten-Leser (4) und
- Speichern der ersten transaktionsbezogenen Daten in dem Chipkartenspeicher der ersten Chipkarte, die in das erste Chipkarten-Lesegerät eingeführt ist.

4. Verfahren nach mindestens einem der vorangehenden Ansprüche, **dadurch gekennzeichnet, dass** die elektronischen Registrierkassen (1.1, ..., 1.n) zum Austausch von elektronischen Daten jeweils wenigstens zeitweise mit einer zentralen Servereinrichtung (3) verbindbar sind, weiterhin aufweisend:
- Übertragen von ersten transaktionsbezogenen Daten an die zentralen Servereinrichtung (3); und
- Speichern der ersten transaktionsbezogenen Daten in einer Speichereinrichtung der zentralen Servereinrichtung (3).

5. Verfahren nach mindestens einem der vorangehenden Ansprüche, **dadurch gekennzeichnet, dass** das Berechnen des ersten / zweiten Hash-Wertes wenigstens eine Bestimmung aus der folgenden Gruppe umfasst: Bestimmen des Hash-Wertes als Prüfsumme und Bestimmen des Hash-Wertes mittels kryptologischer Hashfunktion.

6. Verfahren nach mindestens einem der vorangehenden Ansprüche, **dadurch gekennzeichnet, dass** der erste und der zweite Hash-Wert in einem kassenseitigen Hash-Baum in einer Speichereinrichtung der ersten elektronischen Registrierkasse gespeichert werden.

7. Verfahren nach mindestens einem der vorangehenden Ansprüche, **dadurch gekennzeichnet,** die ersten Zusatzinformationen erste Ortsdaten umfassen, die einen ersten Aufstellort für die erste elektronische Registrierkasse anzeigen.

8. System, mit
- einer zentralen Servereinrichtung (3);
- elektronischen Registrierkassen (1.1, ..., 1.n); und
- einem Transaktionssicherungsmodul, welches mittels einer Sicherungs-Software-applikation in der zentralen Servereinrichtung (3) und den elektronischen Registrierkassen (1.1, ..., 1.n) implementiert und eingerichtet ist, Folgendes auszuführen:
- in einer ersten der elektronischen Registrierkassen (1.1, ..., 1.n),
- Bereitstellen einer ersten Menge von elektronischen Schlüsseln, die aus einer ersten Anzahl von elektronischen Schlüsseln besteht;
- Erzeugen von ersten Transaktionsdaten, die eine mittels der ersten elektronischen Registrierkasse erfasste erste Transaktion anzeigen und der ersten elektronischen Registrierkasse zugeordnet sind;
- Berechnen eines ersten Hash-Wertes für die ersten Transaktionsdaten;
- Zuordnen von ersten Zusatzinformationsdaten zu dem ersten Hash-Wert, wobei die ersten Zusatzinformationsdaten einen ersten Zeitstempel umfassen und der erste Zeitstempel wenigstens eine der folgenden Zeitinformationen anzeigt: Zeitinformation betreffend das Erfassen der ersten Transaktion, Zeitinformation betreffend das Erzeugen der ersten Transaktionsdaten, Zeitinformation betreffend Berechnen des ersten Hash-Wertes und Zeitinformation betreffend das Zuordnen der ersten Zusatzinformationsdaten;
- digitales Signieren des ersten Hash-Wertes mit den ersten Zusatzinformationsdaten unter Verwendung eines ersten elektronischen Schlüssels aus der ersten Menge von elektronischen Schlüsseln, wobei hierbei erste Signaturdaten erzeugt werden;
- Erzeugen von zweiten Transaktionsdaten, die eine mittels der ersten elektronischen Registrierkasse erfasste zweite Transaktion anzeigen und der ersten elektronischen Registrierkasse zugeordnet sind;
- Berechnen eines zweiten Hash-Wertes für die zweiten Transaktionsdaten;
- Zuordnen von zweiten Zusatzinformationsdaten zu dem zweiten Hash-Wert, wobei die zweiten Zusatzinformationsdaten einen zweiten Zeitstempel umfassen und der zweite Zeitstempel wenigstens einer der folgenden Zeitpunkt anzeigt: Zeitinformation betreffend das Erfassen der zweiten Transaktion, Zeitinformation betreffend das Erzeugen der zweiten Transaktionsdaten, Zeitinformation betreffend Berechnen des zweiten Hash-Wertes und Zeitinformation betreffend das Zuordnen der zweiten Zusatzinformationsdaten; und
- digitales Signieren des zweiten Hash-Wertes mit den zweiten Zusatzinformationsdaten unter Verwendung eines weiteren elektronischen Schlüssels aus der ersten Menge von elektronischen Schlüsseln, welcher in der ersten elektronischen Registrierkasse noch nicht zum digitalen Signieren verwendet wurde, wobei hierbei zweite Signaturdaten erzeugt werden; und
- Speichern von ersten transaktionsbezogenen Daten, die den ersten Hash-Wert mit den ersten Zusatzinformationsdaten und die ersten Signaturdaten umfassen, in einer Speichereinrichtung; und
- Speichern der zweiten transaktionsbezogenen Daten, die den zweiten Hash-Wert mit den zweiten Zusatzinformationsdaten und die zweiten Signaturdaten umfassen, in der Speichereinrichtung, wobei hierbei der erste und der zweite Hash-Wert in einem Hash-Baum in der Speichereinrichtung gespeichert werden;
wobei das System eingerichtet ist, die ersten und die zweiten transaktionsbezogenen Daten auf eine mögliche Datenmanipulation zu prüfen, wobei hierbei
- eine Anzahl von genutzten elektronischen Schlüsseln aus der ersten Menge von elektronischen Schlüsseln, die in der ersten elektronisch Registrierkasse zum digitalen Signieren verwendet wurden, mit einer Anzahl von erfassten Transaktionen verglichen wird, für die jeweils zugeordnete transaktionsbezogene Daten in der Speichereinrichtung gespeichert wurden, und
- eine Datenmanipulation festgestellt wird, wenn die Anzahl von genutzten elektronischen Schlüsseln und die Anzahl erfassten Transaktionen nicht übereinstimmen.

## Claims

1. A method for tamper-proof storing of transaction data in a system with electronic cash registers (1.1, ..., 1.n), comprising:
- providing a system with electronic cash registers (1.1, ..., 1.n);
- in a first of the electronic cash registers (1.1, ..., 1.n),
- providing a first plurality of electronic keys which consists of a first number of electronic keys;
- creating first transaction data, which indicate a first transaction recorded by means of the first electronic cash register and is assigned to the first electronic cash register;
- computing a first hash value for the first transaction data;
- assigning first additional information data to the first hash value, wherein the first additional information data comprise a first time stamp and the first time stamp indicates at least one of the following time information: time information regarding the recording of the first transaction, time information regarding the creation of the first transaction data, time information regarding the computing of the first hash value and time information regarding the assigning of the first additional information data;
- digitally signing of the first hash value with the first additional information data using a first electronic key from the first plurality of electronic keys, wherein first signature data are hereby created;
- creating second transaction data, which indicate a second transaction recorded by means of the first electronic cash register and is assigned to the first electronic cash register;
- computing a second hash value for the second transaction data;
- assigning second additional information data to the second hash value, wherein the second additional information data comprise a second time stamp and the second time stamp indicates at least one of the following points in time: time information regarding the recording of the second transaction, time information regarding the creation of the second transaction data, time information regarding the computing of the second hash value and time information regarding the assigning of the second additional information data;
- digitally signing the second hash value with the second additional information data using a further electronic key from the first plurality of electronic keys, which has not yet been used for digital signing in the first electronic cash register, wherein second signature data are hereby created;
- storing first transaction-related data, which comprise the first hash value with the first additional information data and the first signature data, in a storage device; and
- storing the second transaction-related data which comprise the second hash value with the second additional information data and the second signature data, in the storage device, wherein the first and the second hash value are hereby stored in a hash tree in the storage device;
wherein during a checking of the first and second transaction-related data for a possible data manipulation
- a number of used electronic keys from the first plurality of electronic keys, which were used in the first electronic cash register for digital signing, is compared with a number of recorded transactions for which respectively assigned transaction-related data were stored in the storage device, and
- a data manipulation is detected when the number of used electronic keys and the number of recorded transactions do not match.

2. The method of claim 1, **characterized in**
- providing the first electronic cash register with a first exchangeable storage medium and
- storing the first/second transaction-related data on the exchangeable storage medium.

3. The method of claim 2, **characterized in**
- providing the exchangeable storage medium with a first chip card with a chip card memory;
- providing the first electronic cash register with a first chip card reader (4) and
- storing the first transaction-related data in the chip card memory of the first chip card which is inserted into the first chip card reader.

4. The method of any of the preceding claims, **characterized in that** the electronic cash registers (1.1, ..., 1.n) are each connectable, at least temporarily, to a central server device (3) for the exchange of electronic data., further comprising:
- transferring first transaction-related data to the central server device (3); and
- storing the first transaction-related data in a storage device of the central server device (3).

5. The method of any of the preceding claims, **characterized in that** the computing of the first/second hash value comprises at least one determination from the following group:
determining the hash value as a checksum and determining the hash value by means of a cryptological hash function.

6. The method of any of the preceding claims, **characterized in that** the first and second hash value are stored in a cash-register-side hash tree in a storage device of the first electronic cash register.

7. The method of any of the preceding claims, **characterized in**, the first additional information comprises first location data which indicate a first installation location for the first electronic cash register.

8. A system, comprising
- a central server device (3);
- electronic cash registers (1.1, ..., 1.n); and
- a transaction security module, which is implemented by means of a security software application in the central server device (3) and the electronic cash registers (1.1, ..., 1.n), and configured to perform the following:
- in a first of the electronic cash registers (1.1, ..., 1.n),
- providing a first plurality of electronic keys which consists of a first number of electronic keys;
- creating first transaction data, which indicate a first transaction recorded by means of the first electronic cash register and is assigned to the first electronic cash register;
- computing a first hash value for the first transaction data;
- assigning first additional information data to the first hash value, wherein the first additional information data comprise a first time stamp and the first time stamp indicates at least one of the following time information: time information regarding the recording of the first transaction, time information regarding the creation of the first transaction data, time information regarding the computing of the first hash value and time information regarding the assigning of the first additional information data;
- digitally signing of the first hash value with the first additional information data using a first electronic key from the first plurality of electronic keys, wherein first signature data are hereby created;
- creating second transaction data, which indicate a second transaction recorded by means of the first electronic cash register and is assigned to the first electronic cash register;
- computing a second hash value for the second transaction data;
- assigning second additional information data to the second hash value, wherein the second additional information data comprise a second time stamp and the second time stamp indicates at least one of the following points in time: time information regarding the recording of the second transaction, time information regarding the creation of the second transaction data, time information regarding the computing of the second hash value and time information regarding the assigning of the second additional information data;
- digitally signing the second hash value with the second additional information data using a further electronic key from the first plurality of electronic keys, which has not yet been used for digital signing in the first electronic cash register, wherein second signature data are hereby created; and
- storing first transaction-related data, which comprise the first hash value with the first additional information data and first signature data, in a storage device; and
- storing the second transaction-related data which comprise the second hash value with the second additional information data and the second signature data, in the storage device, wherein the first and the second hash value are hereby stored in a hash tree in the storage device;
wherein the system is configured to check the first and second transaction-related data for possible data manipulation, wherein hereby
- a number of used electronic keys from the first plurality of electronic keys, which were used in the first electronic cash register for digital signing, is compared with a number of recorded transactions, for which respectively assigned transaction-related data were stored in the storage device, and
- a data manipulation is detected when the number of used electronic keys and the number of recorded transactions do not match.

## Revendications

1. Procédé de mémorisation de données de transaction à fiabilité de manipulation dans un système à caisses enregistreuses électroniques (1.1, ...,1.n) comprenant :
- la fourniture d'un système de caisses enregistreuses électroniques (1.1, ..., 1.n) ;
- dans une première des caisses enregistreuses électroniques (1.1, ..., 1.n),
- la fourniture d'un premier jeu de clés électroniques, qui est constitué d'un premier nombre de clés électroniques ;
- la génération des premières données, qui indiquent une première transaction enregistrée au moyen de la première caisse enregistreuse électronique et sont associées à la première caisse enregistreuse électronique ;
- le calcul d'une première valeur de hachage pour les premières données de transaction ;
- l'attribution des premières données d'informations supplémentaires à la première valeur de hachage, dans lequel les premières données d'informations supplémentaires comprennent un premier horodatage et le premier horodatage indique au moins une des informations temporelles suivantes : des informations temporelles relatives à l'enregistrement de la première transaction, des informations temporelles relatives à la génération des premières données de transaction, des informations temporelles relatives à le calcul de la première valeur de hachage et des informations temporelles relatives à l'attribution des premières données d'informations supplémentaires ;
- la signature numérique de la première valeur de hachage avec les premières données d'informations supplémentaires à l'aide d'une première clé électronique issue du premier jeu de clés électroniques, en générant ainsi des premières données de signature ;
- la génération des deuxièmes données de transaction, qui indiquent une deuxième transaction enregistrée à l'aide de la première caisse enregistreuse électronique et sont associées à la première caisse enregistreuse électronique;
- le calcul d'une deuxième valeur de hachage pour les deuxièmes données de transaction ;
- l'attribution de deuxièmes données d'informations supplémentaires à la deuxième valeur de hachage, dans lequel les deuxièmes données d'informations supplémentaires comprennent un deuxième horodatage et le deuxième horodatage indique au moins un des instants suivant : des informations temporelles relatives à la détection de la deuxième transaction, des informations temporelles relatives à la génération des deuxièmes données de transaction, des informations temporelles relatives au calcul de la deuxième valeur de hachage et des informations temporelles relatives à l'attribution des deuxièmes données d'informations supplémentaires ;
- la signature numérique de la deuxième valeur de hachage avec les deuxièmes données d'information supplémentaires en utilisant une clé électronique supplémentaire du premier jeu de clés électroniques qui n'ont pas encore été utilisées pour la signature numérique dans la première caisse enregistreuse électronique, en générant ainsi des deuxièmes données de signature ;
- la mémorisation des premières données liées à la transaction, qui comprennent la première valeur de hachage avec les premières données d'informations supplémentaires et les premières données de signature, dans un dispositif de mémorisation ; et
- la mémorisation des deuxièmes données liées à la transaction, qui comprennent la deuxième valeur de hachage avec les deuxièmes données d'informations supplémentaires et les deuxièmes données de signature, dans le dispositif de mémorisation, en mémorisant ainsi la première et la deuxième valeur de hachage étant mémorisées dans une arborescence de hachage dans le dispositif de mémorisation ;
dans lequel lors d'une vérification des première et deuxième données liées à la transaction en recherchant une éventuelle manipulation de données
- un certain nombre de clés électroniques utilisées du premier jeu de clés électroniques, qui sont utilisées dans la première caisse enregistreuse électronique pour la signature numérique est comparé avec un certain nombre de transactions enregistrées, pour lesquelles des données liées à la transaction associées ont été mémorisées dans le dispositif de mémorisation, et
- une manipulation de données est détectée, si le nombre de clés électroniques utilisées et le nombre de transactions enregistrées ne correspondent pas.

2. Procédé selon la revendication 1, **caractérisé par**
- la fourniture de la première caisse enregistreuse électronique avec un premier support de mémorisation amovible et
- la sauvegarde des premières/deuxièmes données liées à la transaction sur le support de mémorisation amovible.

3. Procédé selon la revendication 2, **caractérisé par**
- la fourniture du support de mémorisation amovible avec une première carte à puce dotée d'une mémoire de carte à puce ;
- la fourniture de la première caisse enregistreuse électronique avec un premier lecteur de carte à puce (4) et
- la mémorisation des premières données liées à la transaction dans la mémoire de la première carte à puce insérée dans le premier lecteur de carte à puce.

4. Procédé selon au moins une des revendications précédentes, **caractérisé en ce que** les caisses enregistreuses électroniques (1.1, ...,1.n) peuvent être connectées pour échanger des données électroniques au moins temporairement avec un serveur central (3), comprenant en outre :
- le transfert des premières données liées à la transaction vers le serveur central (3); et
- la mémorisation des premières données liées à la transaction dans un dispositif de mémorisation du serveur central (3).

5. Procédé selon au moins une des revendications précédentes, **caractérisé en ce que** le calcul de la première/deuxième valeur de hachage comprend au moins une détermination parmi le groupe suivant : détermination de la valeur de hachage comme somme de contrôle et détermination de la valeur de hachage à l'aide d'une fonction de hachage cryptographique.

6. Procédé selon au moins une des revendications précédentes, **caractérisé en ce que** les première et deuxième valeurs de hachage sont mémorisées dans une arborescence de hachage côté caisse dans un dispositif de mémorisation de la première caisse électronique.

7. Procédé selon au moins une des revendications précédentes, **caractérisé en ce que** les premières informations complémentaires comprennent des premières données de localisation, qui indiquent un premier emplacement d'installation de la première caisse électronique.

8. Système, comportant
- un serveur central (3) ;
- des caisses enregistreuses électroniques (1.1, ..., 1.n) ; et
- un module de sécurité des transactions, qui est implémenté et configuré pour réaliser les opérations suivantes au moyen d'une application logicielle de sécurité dans le serveur central (3) et les caisses enregistreuses électroniques (1.1, ..., 1.n) :
- dans une première des caisses enregistreuses électroniques (1.1, ..., 1.n),
- la fourniture d'un premier jeu de clés électroniques, qui est constitué d'un premier nombre de clés électroniques ;
- la génération des premières données de transaction, qui indiquent une première transaction enregistrée à l'aide de la première caisse enregistreuse électronique et sont associées à la première caisse enregistreuse électronique ;
- le calcul d'une première valeur de hachage pour les premières données de transaction ;
- l'attribution des premières données d'informations supplémentaires à la première valeur de hachage, dans lequel les premières données d'informations supplémentaires comprennent un premier horodatage et le premier horodatage indique au moins une des informations temporelles suivantes : des informations temporelles relatives à l'enregistrement de la première transaction, des informations temporelles relatives à la génération des premières données de transaction, des informations temporelles relatives à le calcul de la première valeur de hachage et des informations temporelles relatives à l'attribution des premières données d'informations supplémentaires ;
- la signature numérique de la première valeur de hachage avec les premières données d'informations supplémentaires à l'aide d'une première clé électronique issue du premier jeu de clés électroniques, en générant ainsi des premières données de signature ;
- la génération des deuxièmes données de transaction, qui indiquent une deuxième transaction enregistrée à l'aide de la première caisse enregistreuse électronique et sont associées à la première caisse enregistreuse électronique;
- le calcul d'une deuxième valeur de hachage pour les deuxièmes données de transaction ;
- l'attribution de deuxièmes données d'informations supplémentaires à la deuxième valeur de hachage, dans lequel les deuxièmes données d'informations supplémentaires comprennent un deuxième horodatage et le deuxième horodatage indique au moins un des instants suivant : des informations temporelles relatives à la détection de la deuxième transaction, des informations temporelles relatives à la génération des deuxièmes données de transaction, des informations temporelles relatives au calcul de la deuxième valeur de hachage et des informations temporelles relatives à l'attribution des deuxièmes données d'informations supplémentaires ; et
- la signature numérique de la deuxième valeur de hachage avec les deuxièmes données d'information supplémentaires en utilisant une clé électronique supplémentaire du premier jeu de clés électroniques qui n'ont pas encore été utilisées pour la signature numérique dans la première caisse enregistreuse électronique, en générant ainsi des deuxièmes données de signature ; et
- la mémorisation des premières données liées à la transaction, qui comprennent la première valeur de hachage avec les premières données d'informations supplémentaires et les premières données de signature, dans un dispositif de mémorisation ; et
- la mémorisation des deuxièmes données liées à la transaction, qui comprennent la deuxième valeur de hachage avec les deuxièmes données d'informations supplémentaires et les deuxièmes données de signature, dans le dispositif de mémorisation, en mémorisant ainsi la première et la deuxième valeur de hachage étant mémorisées dans une arborescence de hachage dans le dispositif de mémorisation ;
dans lequel le système est configuré pour vérifier les première et deuxième données liées à la transaction en recherchant une éventuelle manipulation de données, auquel cas
- un certain nombre de clés électroniques utilisées du premier jeu de clés électroniques, qui sont utilisées dans la première caisse enregistreuse électronique pour la signature numérique est comparé avec un certain nombre de transactions enregistrées, pour lesquelles des données liées à la transaction associées ont été mémorisées dans le dispositif de mémorisation, et
- une manipulation de données est détectée, si le nombre de clés électroniques utilisées et le nombre de transactions enregistrées ne correspondent pas.
